# EUROPEAN PATENT APPLICATION

(11) **EP 1 528 775 A1**
(43) Date of publication of application: **04.05.2005**
(21) Application number: 03078428.4
(22) Date of filing: 31.10.2003
(51) Int. Cl.: H04M 3/42, H04M 1/57, H04Q 11/04

(54) **Call alerting using call relevance flags**

(71) Applicant: Sony Ericsson Mobile Communications AB, 221 88 Lund (SE)
(72) Inventor: Andersson, Magnus, 211 30 Malmö (SE)
(74) Representative: Dahnér, Christer

(57) **Abstract**

The present invention relates to a method, portable communication device, computer program product and computer program element for sending a call relevance flag with a call for use in alerting a called party as well as a method, portable communication device, computer program product and computer program element for using such a received call relevance flag. The portable communication device (10) of a calling party comprises a control unit (32) receiving a selection of a call relevance flag (40) and a communication unit (28) setting up a voice connection (42) and transmitting the call relevance flag to a called party phone (44). The portable communication device of the called party comprises a communication unit (28) receiving the call relevance flag, a control unit (32) selecting a manner of alerting the called party in dependence of the call relevance flag, and an alerting unit (20,36;24,38) alerting the called party of the call.

## Description

### TECHNICAL FIELD OF THE INVENTION

The present invention relates to the field of telecommunication and then the alerting of a called party of an incoming phone call. More particularly the present invention relates to method, portable communication device, computer program product and computer program element for sending a call relevance flag with a call for use in alerting a called party as well as a method, portable communication device, computer program product and computer program element for using a call relevance flag received in relation to a call.

### DESCRIPTION OF RELATED ART

It is known within the field of portable communication devices to alert a called party about an incoming call by using a ring signal. At the same it is possible to also display the phone number of the calling party to the called party. If the calling party is known by the called party, i.e. the called party has the phone number of the calling party stored in his phone book or on a SIM card, it is furthermore possible to for instance display a photo of the calling party to the called party. In this case the called party has to have the photo stored in the phone and linked to the phone book beforehand. There does however not seem to exist a way for the calling party to provide more information to the called party than the phone number when in the process of alerting a call.

It would however be beneficial if it was possible to provide further information in relation to call, so that the called party can find out the importance and/or other aspects of the call that the calling party wants to convey.

### SUMMARY OF THE INVENTION

The present invention is directed towards solving the problem of providing additional data in relation to a call, which can be used to provide information about the importance and/or other aspects relating to the call or the calling party when alerting the called party of the call.

This problem is according to the invention solved through selecting a call relevance flag and sending it from a calling party to a called party during the setting up of a voice connection. This call relevance flag can then be used for alerting the called party.

One object of the present invention is to provide a method of sending additional data with a call for use in alerting a called party, which can be used to enhance the experience of the call for a called party.

According to a first aspect of the present invention this object is achieved by a method of of sending a call relevance flag with a call for use in alerting a called party comprising the steps of:
selecting, by a calling party, at least one call relevance flag for use in alerting a called party of a phone call,
setting up a voice connection to a called party phone, and
transmitting said at least one call relevance flag to the called party phone during the setting up of the voice connection, such that the call relevance flag can be used for selecting the manner of alerting the called party of the phone call provided over the connection.

A second aspect of the present invention includes the features of the first aspect, wherein the flag is transmitted during the signaling phase for setting up the connection.

A third aspect of the present invention includes the features of the first aspect, wherein one call relevance flag is a flag indicating the priority of the call according to the calling party.

A fourth aspect of the present invention includes the features of the third aspect, wherein the priority is a priority in the group of low, normal or high.

A fifth aspect of the present invention includes the features of the first aspect, wherein one call relevance flag is a flag indicating the mood of the calling party.

A sixth aspect of the present invention includes the features of the fifth aspect, wherein the mood is a mood in the group of angry, sad, happy, content, nervous, anxious and scared.

A seventh aspect of the present invention includes the features of the first aspect, further comprising the step of selecting at least one media object for use in alerting the called party and transmitting also the media object to the called party phone during the setting up of the voice connection, such that the called party can use also the media object when being alerted about the phone call provided over the connection.

Another object of the present invention is to provide a portable communication device that sends additional data in relation to a call, which can be used to enhance the experience of the call for a called party.

According to an eighth aspect of the present invention, this object is achieved by a portable communication device for sending a call relevance flag with a call for use in alerting a called party and comprising:
a control unit arranged to receive a selection by a user of at least one call relevance flag to be used in selecting manner of alerting a called party of a phone call, and
a communication unit arranged to set up a voice connection to a called party phone, and transmit the call relevance flag to the called party phone during the setting up of the voice connection.

A ninth aspect of the present invention includes the features of the eighth aspect, wherein the communication unit is arranged to transmit the call relevance flag during the signaling phase for setting up the connection.

A tenth aspect of the present invention includes the features of the eighth aspect, wherein one call relevance flag is a flag indicating the priority of the call according to the calling party.

An eleventh aspect of the present invention includes the features of the tenth aspect, wherein the priority is a priority in the group of low, normal or high.

A twelfth aspect of the present invention includes the features of the eighth aspect, wherein one call relevance flag is a flag indicating the mood of the calling party.

A thirteenth aspect of the present invention includes the features of the twelfth aspect, wherein the mood is a mood in the group of angry, sad, happy, content, nervous, anxious and scared.

A fourteenth aspect of the present invention includes the features of the eighth aspect, wherein the control unit is further arranged to select at least one media object for use in alerting a called party of a phone call and provide the media object for transmission to a called party phone and the communication unit is arranged to transmit also the media object to the called party phone during the setting up of the voice connection.

A fifteenth aspect of the present invention includes the features of the eighth aspect, wherein it is a cellular phone.

Another object of the present invention is to provide a computer program product that enables sending additional data in relation to a call, which can be used to enhance the experience of the call for a called party.

According to a sixteenth aspect of the present invention this object is achieved by a computer program product comprising a computer readable medium, having thereon:
computer program code means, to make a portable communication device execute, when said program is loaded in the portable communication device,
select at least one call relevance flag for use in alerting a called party of a phone call, and
at least order the setting up a voice connection to a called party phone and transmission of said at least one call relevance flag to the called party phone during the setting up of the voice connection, such that the call relevance flag can be used for selecting the manner of alerting the called party of the phone call provided over the connection.

Another object of the present invention is to provide a computer program element that enables sending additional data in relation to a call, which can be used to enhance the experience of the call for a called party.

According to a seventeenth aspect of the present invention, this object is achieved by a computer program element comprising:
computer program code means to make a portable communication device execute, when said program element is loaded in the portable communication device,
select at least one call relevance flag for use in alerting a called party of a phone call, and
at least order the setting up a voice connection to a called party phone and transmission of said at least one call relevance flag to the called party phone during the setting up of the voice connection, such that the call relevance flag can be used for selecting the manner of alerting the called party of the phone call provided over the connection.

Another object of the present invention is to provide a method of using additional data received in relation to a call, which can be used to enhance the experience of the call for a called party.

According to an eighteenth aspect of the present invention this object is achieved by a method of using a call relevance flag received in relation to a call and comprising the steps of:
receiving a call relevance flag from a calling party phone during a set up of a voice connection,
selecting manner of alerting the called party in dependence of the call relevance flag, and
alerting the called party about the call in the selected manner.

A nineteenth aspect of the present invention includes the features of the eighteenth aspect, wherein the call relevance flag is received during the signaling phase for setting up the connection.

A twentieth aspect of the present invention includes the features of the eighteenth aspect, wherein the step of selecting comprises selecting at least one media object corresponding to the call relevance flag and the step of alerting comprises using the media object for alerting the called party.

A twenty-first aspect of the present invention includes the features of the twentieth aspect, wherein said at least one media object includes a ring tone and the step of alerting comprises using that ring tone for alerting the called party.

A twenty-second aspect of the present invention includes the features of the twentieth aspect, wherein said at least one media object includes a piece of text and the step of alerting comprises displaying that text when alerting the called party.

A twenty-third aspect of the present invention includes the features of the twentieth aspect, wherein said at least one media object includes an image and the step of alerting comprises displaying that image when alerting the called party.

A twenty-fourth aspect of the present invention includes the features of the eighteenth aspect, wherein one call relevance flag is a flag indicating the priority of the call according to the calling party.

A twenty-fifth aspect of the present invention includes the features of the eighteenth aspect, wherein one call relevance flag is a flag indicating the mood of the calling party.

A twenty-sixth aspect of the present invention includes the features of the eighteenth aspect, wherein the step of receiving comprises receiving a media object from the calling party phone during the set up of the voice connection and further comprising the step of alerting the called party also using the media object.

Another object of the of the present invention is to provide a portable communication device that uses additional data received in relation to a call, which can be used to enhance the experience of the call for a called party.

According to a twenty-seventh aspect of the present invention, this object is achieved by a portable communication device for using a call relevance flag received in relation to a call and comprising:
a communication unit arranged to receive a call relevance flag from a calling party phone during a set up of a voice connection,
a control unit arranged to select manner of alerting the called party in dependence of the call relevance flag, and
at least one alerting unit arranged to alert the called party in the selected manner of a call being made via the voice connection.

A twenty-eighth aspect of the present invention includes the features of the twenty-seventh aspect, wherein the communication unit is arranged to receive the call relevance flag during the signaling phase for setting up the connection.

A twenty-ninth aspect of the present invention includes the features of the twenty-seventh aspect, wherein the control unit, when selecting, is arranged to select at least one media object corresponding to the call relevance flag and the alerting is performed using the media object.

A thirtieth aspect of the present invention includes the features of the twenty-ninth aspect, wherein the alerting unit is any of the units in the group of display, vibrator, speaker, earphone or microphone.

A thirty-first aspect of the present invention includes the features of the thirtieth aspect, wherein said at least one media object includes a piece of text and a display is arranged to display that text when alerting the called party.

A thirty-second aspect of the present invention includes the features of the thirtieth aspect, wherein said at least one media object includes an image and a display is arranged to display that image when alerting the called party.

A thirty-third aspect of the present invention includes the features of the thirtieth aspect, wherein said at least one media object includes a ring tone and an alerting unit comprises a speaker and a ring tone generating unit arranged to use that ring tone for alerting the called party.

A thirty-fourth aspect of the present invention includes the features of the twenty-seventh aspect, wherein one call relevance flag is a flag indicating the priority of the call according to the calling party.

A thirty-fifth aspect of the present invention includes the features of the twenty-seventh aspect, wherein one call relevance flag is a flag indicating the mood of the calling party.

A thirty-sixth aspect of the present invention includes the features of the twenty-seventh aspect, wherein the communication unit is further arranged to receive a media object from the calling party phone during the set up of a voice connection and an alerting unit is further arranged to alert the called party of a call being made via the voice connection using the received media object.

A thirty-seventh aspect of the present invention includes the features of the twenty-seventh aspect, wherein the device is a cellular phone.

Another object of the present invention is to provide a computer program product that enables the use of additional data received in relation to a call, which can be used to enhance the experience of the call for a called party.

According to a thirty-eighth aspect of the present invention, this object is achieved by a computer program product comprising a computer readable medium, having thereon:
computer program code means, to make a portable communication device execute, when said program is loaded in the portable communication device,
receive a call relevance flag from a calling party phone during the set up of a voice connection,
select manner of alerting a called party of the call in dependence of the call relevance flag, and
at least enable alerting the called party about the call in the selected manner.

Another object of the present invention is to provide a computer program element that enables the use of additional data received in relation to a call, which can be used to enhance the experience of the call for a called party.

According to a thirty-ninth aspect of the present invention this object is achieved by a computer program element comprising:
computer program code means to make a portable communication device execute, when said program element is loaded in the portable communication device, receive a call relevance flag from a calling party phone during the set up of a voice connection,
select manner of alerting a called party of the call in dependence of the call relevance flag, and
at least enable alerting the called party about the call in the selected manner

The invention has the following advantages. With the present invention it is possible to provide a number of different ways to enhance the alerting of a call for a called party. The called party can then see the priority and/or the mood according to the calling party, which simplifies the decision of how to respond to the call. The quality of the service is higher and the called party obtains an enhanced experience of the call without having to send large amounts of data from the calling party to the called party. The alerting according to the invention is furthermore quick, since there are no significant delays involved in transmitting a call relevance flag. The invention is rather easy to implement. This also makes the cost of the invention low.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a portable communication device in the form of a cellular phone communicating with another portable communication device, also in the form of a cellular phone, via a cellular network,
fig. 2 shows the phone in fig. 1,
fig. 3 shows a block schematic of the relevant parts of the phone in fig. 2,
fig. 4 shows a flow chart of a method of performing a first method in a phone according to an embodiment of the invention,
fig. 5 shows a flow chart of a method of performing a second method in a phone according to an embodiment of the invention, and
fig. 6 shows a CD Rom on which program code for executing a method according to the invention is provided.

### DETAILED DESCRIPTION OF EMBODIMENTS

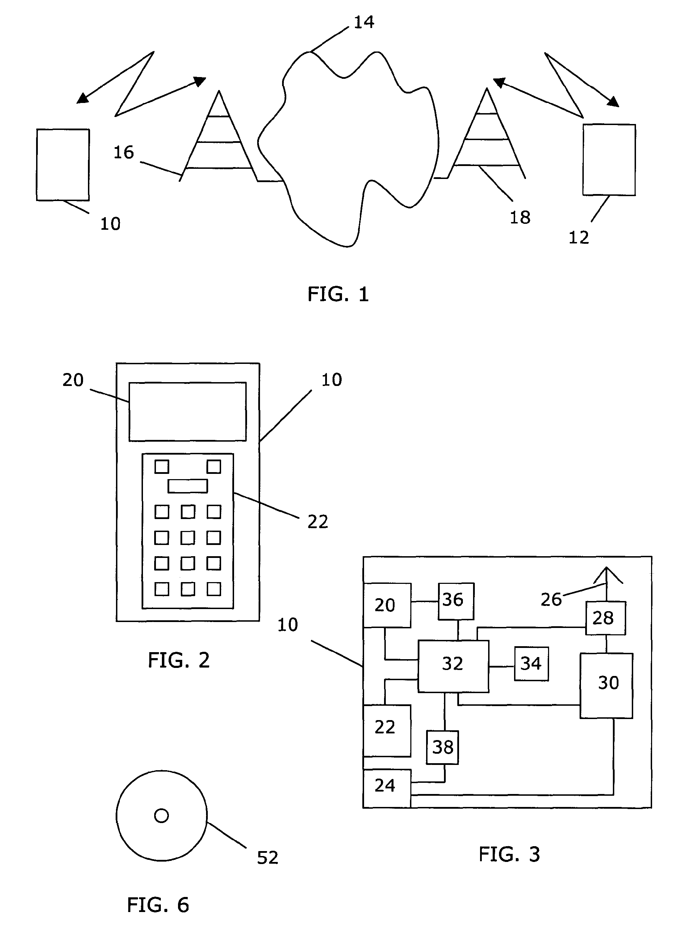

Fig. 1 schematically shows a first portable communication device 10 communicating with a second portable communication device 12 via a cellular network 14. Because of this the first portable communication device 10 is communicating with the network 14 via a first base station 16 and the second portable communication device 12 is communicating with the network 14 via a second base station 18. The network is normally a GSM network. It is of course also possible that the network is a GPRS or WCDMA network or any third generation cellular network. The network can however also be a fixed network like PSTN or a network using IP telephony.

Fig. 2 shows a front view of the first portable communication device 10. It should however be realised that the second portable communication device can look the same, why this view is applicable also for this device. In the preferred embodiment the device is a cellular phone 10 having a display 20 and a keypad 22 including a number of keys. The keypad 22 is used for entering information such as making and accepting the reception of phone calls, selection of functions and responding to prompts and the display 20 is used for displaying functions and prompts to a user of the phone. The phone also includes an antenna, which is used for communication with other devices, like the second portable communication device. However the antenna is in-built in the phone and hence not shown in the figure. The phone also includes a speaker for presenting sounds to a user, which speaker is also not shown. A cellular phone is just one example of a device in which the invention can be implemented. The invention can for instance also be used in a PDA (personal digital assistant), a palm top computer, a lap top computer, a cordless phone or a smartphone, provided they have phone call handling functionalities.

Fig. 3 shows part of the interior of the cellular phone that is relevant for the present invention and that is to be used in both the first and second portable communication device. The phone 10 includes an antenna 26 connected to a communication unit in the form of a radio circuit 28 for enabling radio communication with the network of fig. 1. The radio circuit 28 is connected to a control unit 32. The control unit 32 is connected to the display 20 and to the keypad 22 for receiving inputs and selections from the user of the phone. The control unit 32 is also connected to a speaker 24 via a ring signal generating unit 38 for presenting ring signals to a user of the phone 10. The control unit 32 is furthermore connected to a an object storage 34 and a multimedia handling unit, which in this embodiment is a text/image handling unit 36. The text/image handling unit 36 is also connected to the display 20. The radio circuit 28 is also connected to a call handling unit 30 for handling incoming and outgoing calls. The call handling unit 30 is furthermore connected to both the control unit 32 and to the speaker 24 in order to provide speech received from a voice connection set up via the network of fig. 1. It should be realised that the phone can include other units than the ones described and shown, for instance a phone book and a microphone.

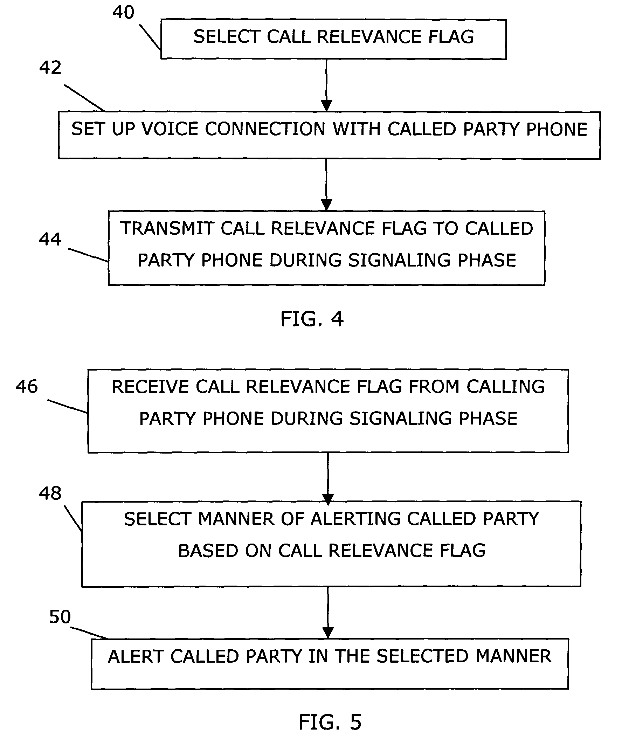

The functioning of the first portable communication device according to an embodiment of the present invention will now be described in relation to the previously described fig. 1-3 together with fig. 4, which shows a flow chart of a preferred embodiment of a first method according to the invention.

The phone 10 according to the invention can make and receive calls using the call handling unit 30 in combination with the radio circuit 28 and antenna 26.When a user of the phone 10, hereafter named calling party, wants to make a phone call to the second phone 12, he is presented with an option to include a call relevance flag indicating the relevance of the call or his mood for transfer to a called party, i.e. a user of the second phone 12. This presentation is made on the display 20 by the control unit 32. The calling party is then presented with a number of possible relevance settings like priority: high, medium or low or mood: happy, angry, sad, nervous, anxious etc. The calling party then selects one such flag, step 40, using the keypad 22, which selection the control unit 32 receives. It should here be realised that a keypad is just one type of user input unit that can be used. A joystick can for instance also be used as well as voice control. The control unit 32 then retrieves a flag corresponding to the selection made, which can be made from the objects storage 34. The control unit 32 then provides the selected flag to the radio circuit 28. The radio circuit 28 then sets up a voice connection with phone 12 via the antenna 26, step 42, which is done in a signaling phase. In doing this the radio circuit 28 transmits the call relevance flag to the phone 12. The call relevance flag is here included in the signaling information transferred in the signaling phase, step 44, and preferably provided at the same time as the phone number of the calling party is sent. In this way the call relevance flag is transferred to the phone 12 of the called party.

Now a second method according to the present invention for handling the received call relevance flag in the phone of the called party will be described with reference being made to fig. 1 -3 and fig. 5, which latter figure shows a flow chart of the method.

The phone 12 of the recipient or called party first receives the signaling information including the call relevance flag from the first phone 10, which call relevance flag is thus received during the signaling phase, step 46. The call relevance flag is then transferred to the control unit 32 from the radio circuit 28. The control unit 32 then identifies the type of call relevance flag and selects the manner in which the called party is to be alerted, step 48. The call relevance flag is associated with a certain priority or mood of the calling party, where a text object corresponding to the mood or priority is stored in the objects storage 34. The text object here includes a piece of text that corresponds to the priority or mood flag and which is to be displayed on the display 20. Here the text/image handling unit 36 together with the display 20 acts a first alerting unit and the ring signal generating unit 38 together with the speaker acts as a second alerting unit. The control unit 32 therefore retrieves the text object corresponding to the flag from the objects storage 34 and forwards it to the text/media handling unit 36, which proceeds with alerting the called party of the call using the text object. At the same time the control unit 32 alerts the called party of the call also using the second alerting unit and the normal ring tone of the phone. The called party is thus alerted of the call in the selected manner, step 50. It should be realised that an alerting unit is not limted to the ones described above but can be any in the group of vibrator, display, microphone and earphone.

It should be realised that the manner of alerting is not limited to selecting a text message displayed to the called party. It is equally as well possible to select a special ring tone that corresponds to the call relevance flag that is played instead of the ordinary ring tone or that an image object is selected and presented to the called party. It is furthermore possible to also select a video clip or an image that is shown in dependence of the call relevance flag. The called party can advantageously perform this selection beforehand. The user or called party can then himself set how different types of calls are to be alerted. It is also possible to apply the flag for several alerting units. For instance a text object, an image and a special ring tone can be used for the high priority. It is furthermore possible to have the order that these different types of objects are used in alerting be determined by the flag. In the description above the priority or the mood was presented, it is also possible to provide presentation and selection of both at the same time, i.e. that a priority of the call and the mood of the calling party are presented together. It is furthermore possible to combine the alerting with showing images of the calling party if an image of the calling party is stored in relation to the phone book of the called party.

With the present invention it is thus possible to provide a number of different ways to enhance the alerting of a call for a called party. The called party can then see the priority and/or the mood according to the calling party, which simplifies the decision of what to do, i.e. if he wants to receive the call or not or to call back later. He can then also better brace himself for how he will act during that call, for instance refrain from making bad jokes if the calling party is sad. The quality of the included information is thus higher and the called party obtains an enhanced experience of the call.

There are a number of further variations that are possible regarding the present invention. The phone of the calling party need in fact only include the parts described in relation to the first method, while the phone of the calling party then only would need the parts described in relation to the second method.

According to another embodiment of the invention it is furthermore possible to provide a media object together with a call. In this embodiment the calling party gets to select a media object together with a possible object type identifier. The object can be created by the calling party or be pre-stored in the phone. This object and the possible type identifier is then provided together with the call relevance flag in the signaling information when the call is set up. The control unit of the called party can then select alerting unit and also alert the called party of the call using the selected alerting unit, which alerts the called party of the call using the received media object. In this case the same or another alerting unit can then be used for alerting using the call relevance flag. The media object can here be a special ring tone, an image, still or moving, or a piece of text.

The control unit according to the present invention is preferably provided in the form of one or more processors with corresponding memory containing the program code and the objects storage is provided in the form of a memory.

The program code mentioned above can also be provided on a data carrier such as a CD ROM disc 52 as depicted in fig. 6 or an insertable memory stick, which will perform the invention when loaded into a phone having suitable processing capabilities. The program code can also be downloaded remotely from a server either outside or inside the cellular network or be downloaded via a computer like a PC to which the phone is temporarily connected.

The present invention has several advantages apart from those already described. It is easy to implement. It can be implemented by just some slight modifications of the software in the phone. This also makes the cost of the invention low. With the transmission of a call relevance flag a remarkable enhancement of the experience of the call can be obtained without having to send large amounts of data from the calling party to the called party, since there are no significant delays involved in transmitting a call relevance flag.

## Claims

1. Method of sending a call relevance flag with a call for use in alerting a called party comprising the steps of:
selecting, by a calling party, at least one call relevance flag for use in alerting a called party of a phone call, (step 40),
setting up a voice connection to a called party phone, (step 42), and
transmitting said at least one call relevance flag to the called party phone during the setting up of the voice connection, (step 44), such that the call relevance flag can be used for selecting the manner of alerting the called party of the phone call provided over the connection.

2. Method according to claim 1, wherein the flag is transmitted during the signaling phase for setting up the connection.

3. Method according to claim 1 or 2, wherein one call relevance flag is a flag indicating the priority of the call according to the calling party.

4. Method according to claim 3, wherein the priority is a priority in the group of low, normal or high.

5. Method according to any previous claim, wherein one call relevance flag is a flag indicating the mood of the calling party.

6. Method according to claim 5, wherein the mood is a mood in the group of angry, sad, happy, content, nervous, anxious and scared.

7. Method according to any previous claim, further comprising the step of selecting at least one media object for use in alerting the called party and transmitting also the media object to the called party phone during the setting up of the voice connection, such that the called party can use also the media object when being alerted about the phone call provided over the connection.

8. Portable communication device (10) for sending a call relevance flag with a call for use in alerting a called party and comprising:
a control unit (32) arranged to receive a selection by a user of at least one call relevance flag to be used in selecting manner of alerting a called party of a phone call, and
a communication unit (28) arranged to set up a voice connection to a called party phone (12), and transmit the call relevance flag to the called party phone during the setting up of the voice connection.

9. Portable communication device according to claim 8, wherein the communication unit is arranged to transmit the call relevance flag during the signaling phase for setting up the connection.

10. Portable communication device according to claim 8 or 9, wherein one call relevance flag is a flag indicating the priority of the call according to the calling party.

11. Portable communication device according to claim 10, wherein the priority is a priority in the group of low, normal or high.

12. Portable communication device according to any of claims 8 - 11, wherein one call relevance flag is a flag indicating the mood of the calling party.

13. Portable communication device according to claim 12, wherein the mood is a mood in the group of angry, sad, happy, content, nervous, anxious and scared.

14. Portable communication device according to any of claims 8 - 13, wherein the control unit is further arranged to select at least one media object for use in alerting a called party of a phone call and provide the media object for transmission to a called party phone and the communication unit is arranged to transmit also the media object to the called party phone during the setting up of the voice connection.

15. Portable communication device according to any of claims 8 -14, wherein it is a cellular phone.

16. A computer program product (52) comprising a computer readable medium, having thereon:
computer program code means, to make a portable communication device (10) execute, when said program is loaded in the portable communication device, select at least one call relevance flag for use in alerting a called party of a phone call, and
at least order the setting up a voice connection to a called party phone and transmission of said at least one call relevance flag to the called party phone during the setting up of the voice connection, such that the call relevance flag can be used for selecting the manner of alerting the called party of the phone call provided over the connection.

17. A computer program element comprising:
computer program code means to make a portable communication device (10) execute, when said program element is loaded in the portable communication device,
select at least one call relevance flag for use in alerting a called party of a phone call, and
at least order the setting up a voice connection to a called party phone and transmission of said at least one call relevance flag to the called party phone during the setting up of the voice connection, such that the call relevance flag can be used for selecting the manner of alerting the called party of the phone call provided over the connection.

18. Method of using a call relevance flag received in relation to a call and comprising the steps of:
receiving a call relevance flag from a calling party phone during a set up of a voice connection, (step 46),
selecting manner of alerting a called party in dependence of the call relevance flag, (step 48), and
alerting the called party about the call in the selected manner, (step 50).

19. Method according to claim 18, wherein the call relevance flag is received during the signaling phase for setting up the connection.

20. Method according to claim 18 or 19, wherein the step of selecting comprises selecting at least one media object corresponding to the call relevance flag and the step of alerting comprises using the media object for alerting the called party.

21. Method according to claim 20, wherein said at least one media object includes a ring tone and the step of alerting comprises using that ring tone for alerting the called party.

22. Method according to claim 20 or 21, wherein said at least one media object includes a piece of text and the step of alerting comprises displaying that text when alerting the called party.

23. Method according to any of claims 20 - 22, wherein said at least one media object includes an image and the step of alerting comprises displaying that image when alerting the called party.

24. Method according to any of claims 18 - 23, wherein one call relevance flag is a flag indicating the priority of the call according to the calling party.

25. Method according to any of claims 18 - 24, wherein one call relevance flag is a flag indicating the mood of the calling party.

26. Method according to any of claims 18 - 25, wherein the step of receiving comprises receiving a media object from the calling party phone during the set up of the voice connection and further comprising the step of alerting the called party also using the media object.

27. Portable communication device (12) for using a call relevance flag received in relation to a call and comprising:
a communication unit (28) arranged to receive a call relevance flag from a calling party phone during a set up of a voice connection,
a control unit (32) arranged to select manner of alerting the called party in dependence of the call relevance flag, and
at least one alerting unit (20, 36; 24, 38) arranged to alert the called party in the selected manner of a call being made via the voice connection.

28. Portable communication device according to claim 27, wherein the communication unit is arranged to receive the call relevance flag during the signaling phase for setting up the connection.

29. Portable communication unit according to claim 27 or 28, wherein the control unit, when selecting, is arranged to select at least one media object corresponding to the call relevance flag and the step of alerting is performed using the media object.

30. Portable communication unit according to claim 29, wherein the alerting unit is any of the units in the group of display (20), vibrator, speaker, earphone or microphone.

31. Portable communication device according to claim 30, wherein said at least one media object includes a piece of text and a display is arranged to display that text when alerting the called party.

32. Portable communication device according to claim 30 or 31, wherein said at least one media object includes an image and a display is arranged to display that image when alerting the called party.

33. Portable communication device according to any of claims 30 - 32, wherein said at least one media object includes a ring tone and an alerting unit comprises a speaker (24) and a ring tone generating unit (38) arranged to use that ring tone for alerting the called party.

34. Portable communication device according to any of claims 27 - 33, wherein one call relevance flag is a flag indicating the priority of the call according to the calling party.

35. Portable communication device according to any of claims 27 - 34, wherein one call relevance flag is a flag indicating the mood of the calling party.

36. Portable communication device according to any of claims 27 - 35, wherein the communication unit is further arranged to receive a media object from the calling party phone during the set up of a voice connection and an alerting unit is further arranged to alert the called party of a call being made via the voice connection using the received media object.

37. Portable communication device according to any of claims 27 - 36, wherein the device is a cellular phone.

38. A computer program product (52) comprising a computer readable medium, having thereon:
computer program code means, to make a portable communication device execute, when said program is loaded in the portable communication device, receive a call relevance flag from a calling party phone during the set up of a voice connection,
select manner of alerting a called party of the call in dependence of the call relevance flag, and
at least enable alerting the called party about the call in the selected manner.

39. A computer program element comprising:
computer program code means to make a portable communication device execute, when said program element is loaded in the portable communication device,
receive a call relevance flag from a calling party phone during the set up of a voice connection,
select manner of alerting a called party of a call in dependence of the call relevance flag, and
at least enable alerting the called party about the call in the selected manner.
